# EUROPEAN PATENT SPECIFICATION

(11) **EP 2 346 220 B1**
(45) Date of publication and mention of the grant of the patent: **13.08.2014**
(21) Application number: 10150909.9
(22) Date of filing: 15.01.2010
(51) Int. Cl.: H04L 12/58

(54) **Method and portable electronic device for processing images**
Verfahren zur Verarbeitung von Bildern und entsprechende elektronische Vorrichtung
Procédé et dispositif électronique portable pour le traitement d'images

(43) Date of publication of application: 20.07.2011
(73) Proprietor: BlackBerry Limited, Waterloo, ON N2K 0A7 (CA)
(72) Inventor: Dumitru, Dan, Mihai, Wilmington, DE Delaware 19801 (US); Arora, Rakesh, Kumar, Mississauga Ontario L4W 0B5 (CA); Adams, Neil, Patrick, Waterloo Ontario N2L 5Z5 (CA); Macfarlane, David, Victor, Waterloo Ontario N2L 3L3 (CA)
(74) Representative: MERH-IP Matias Erny Reichl Hoffmann

(56) References cited:
- WO-A1-2009/136346
- US-A1- 2005 122 345
- US-A1- 2006 168 543
- US-A1- 2007 011 258
- US-A1- 2008 281 924
- US-A1- 2009 005 010
- US-A1- 2009 228 807

## Description

### FIELD

The specification relates generally to portable electronic devices, and specifically to a method and portable electronic device for processing images.

### BACKGROUND

Methods of processing images that are attached to emails are currently inefficient. For example, current attachment viewer implementations allow only for individual attachment retrieval, meaning that a lot of actions are performed to retrieve and process multiple images attached to an email. These actions include selecting a first image from an attachment list to retrieve and process the first image to view it, closing the first image to again provide the attachment list, then selecting a second image from an attachment list to retrieve and process the second image to view it, etc. Such a process places undue wear and tear on input device at the portable electronic device, and is an inefficient use of computing resources as multiple select and retrieve commands are processed and implemented.
Document WO 2009/136346 A1 discloses a method of packaging and displaying an e-mail having at least a first independent digital object and a corresponding first tag, and at least a first dependent digital object associated with the first independent digital object through said first tag (abstract). In other words, each attachment, such as a photo, is tagged with descriptive text. Processing of the photos to attach tags can occur at a server in order to prepare them for sequential displaying. Finally, the message, including all the attachments, tags etc., is sent to an end device where the photos and associated descriptions are displayed.
Document US 2009/005010 A1 discloses a method, wherein a remote server receives a message including attachments from a portable electronic device, separates the attachments from the message, identifies the type of each attachment (such as an image file) and stores the attachments in a content repository of a mobile publishing engine.
Document US 2009/0228807 A1 discloses a method for displaying graphics embedded within an email message. If a user selects the embedded graphics, various options, such as the displaying of a slideshow, are presented to the user.

### SUMMARY

A first aspect of the specification provides a method for processing images at a portable electronic device, the images stored electronically at a remote server as attachments to message data, the message data received at the portable electronic device with indicators identifying corresponding attachments to the message data. The portable electronic device comprises a processing unit interconnected with an input device, and a display device. The method comprises receiving first input data, from the input device, indicative that one of the indicators, corresponding to one of the images, has been selected. The method further comprises retrieving the one of the images from the remote server. The method further comprises processing the one of the images, at the processing unit, such that the one of the images is displayed at the display device. The method further comprises receiving second input data, from the input device, indicative that a next one of the images is to be displayed, the second input data received while the one of the images is displayed at the display device. The method further comprises retrieving the next one of the images from the remote server. The method further comprises processing the next one of the images, at the processing device, such that the next one of the images is displayed at the display device.

The method can further comprise: processing the indicators to generate a list of the images, the list comprising a subset of the indicators; and identifying the next one of the images based on the list. The method can further comprise: determining that a given indicator on the list corresponds to an attachment that has been misidentified as an image; and removing the given indicator from the list. The method can further comprise: determining that an attachment identified by a corresponding indicator which is not on the list is an image, the attachment having been initially misidentified; and adding the corresponding identifier to the list such that the attachment identified by the corresponding indicator can be displayed as the image.

The second input data can be further indicative that the images are each to be automatically retrieved and displayed at the display device in a sequence. The method can further comprise automatically retrieving and displaying each image in the sequence at the display device.

The method can further comprise storing the images at a memory device at the portable electronic device upon retrieval from the remote server. The method can further comprise: receiving third input data, from the input device, indicative that a previous one of the images is to be displayed, the third input data received while the next one of the images is displayed at the display device; retrieving the previous one of the images from the memory; and processing the previous one of the images, at the processing device, such that the previous one of the images is displayed at the display device.

The remote server can comprise at least one of a mail server, an attachment server and a proxy server.

A second aspect of the specification comprises a portable electronic device for processing images stored electronically at a remote server as attachments to message data, the message data received at the portable electronic device with indicators identifying corresponding attachments to the message data. The portable electronic device comprises a processing unit interconnected with an input device, and a display device. The processing unit is enabled to receive first input data, from the input device, indicative that one of the indicators, corresponding to one of the images, has been selected. The processing unit is further enabled to retrieve the one of the images from the remote server. The processing unit is further enabled to process the one of the images, at the processing unit, such that the one of the images is displayed at the display device. The processing unit is further enabled to receive second input data, from the input device, indicative that a next one of the images is to be displayed, the second input data received while the one of the images is displayed at the display device. The processing unit is further enabled to retrieve the next one of the images from the remote server. The processing unit is further enabled to process the next one of the images, at the processing device, such that the next one of the images is displayed at the display device.

The processing unit can be further enabled to: process the indicators to generate a list of the images, the list comprising a subset of the indicators; and identify the next one of the images based on the list. The processing unit can be further enabled to: determine that a given indicator on the list corresponds to an attachment that has been misidentified as an image; and remove the given indicator from the list. The processing unit can be further enabled to: determine that an attachment identified by a corresponding indicator which is not on the list is an image, the attachment having been initially misidentified; and add the corresponding identifier to the list such that the attachment identified by the corresponding indicator can be displayed as the image.

The second input data can be further indicative that the images are each to be automatically retrieved and displayed at the display device in a sequence. The processing unit can be further enabled to automatically retrieve and display each the image in the sequence at the display device.

The processing unit can be further enabled to store the images at a memory device at the portable electronic device upon retrieval from the attachment server. The processing unit can be further enabled to: receive third input data, from the input device, indicative that a previous one of the images is to be displayed, the third input data received while the next one of the images is displayed at the display device; retrieve the previous one of the images from the memory; and process the previous one of the images, at the processing device, such that the previous one of the images is displayed at the display device.

The remote server can comprise at least one of a mail server, an attachment server and a proxy server.

A third aspect of the specification provides a computer program product, comprising a computer usable medium having a computer readable program code adapted to be executed to implement a method for processing images at a portable electronic device, the images stored electronically at a remote server as attachments to message data, the message data received at the portable electronic device with indicators identifying corresponding attachments to the message data. The portable electronic device comprises a processing unit interconnected with an input device, and a display device. The method comprises: receiving first input data, from the input device, indicative that one of the indicators, corresponding to one of the images, has been selected; retrieving the one of the images from the remote server; processing the one of the images, at the processing unit, such that the one of the images is displayed at the display device; receiving second input data, from the input device, indicative that a next one of the images is to be displayed, the second input data received while the one of the images is displayed at the display device; retrieving the next one of the images from the remote server; and processing the next one of the images, at the processing device, such that the next one of the images is displayed at the display device.

### BRIEF DESCRIPTIONS OF THE DRAWINGS

Embodiments are described with reference to the following figures, in which:

Fig. 1 depicts a block diagram of system including a portable electronic device for processing images, according to non-limiting embodiments;

Fig. 2 depicts a representation of a message view of an application providing image identifiers, according to non-limiting embodiments;

Fig. 3 depicts a representation of an attachment view of an application providing image identifiers, according to non-limiting embodiments;

Fig. 4 depicts a representation of an image in an application for displaying images, according to non-limiting embodiments;

Fig. 5 depicts a representation of an image with a menu for controlling display of images in an application for displaying images, according to non-limiting embodiments;

Fig. 6 depicts a representation of a next image in an application for displaying images, according to non-limiting embodiments;

Fig. 7 depicts a block diagram of system including a portable electronic device for processing images, according to non-limiting embodiments;

Fig. 8 depicts a representation of an image with a warning that an attachment has been misidentified as an image in an application for displaying images, according to non-limiting embodiments;

Fig. 9 depicts a representation of an image added to a list of images, with a menu for controlling display of images in an application for displaying images, according to non-limiting embodiments;

Fig. 10 depicts a flow chart of a method for processing images, according to non-limiting embodiments;

Figs. 11 to 13 depict a block diagram of a system including a portable electronic device for processing images, according to non-limiting embodiments;

Fig. 14 depicts a representation of an image with an indicator that a next image is being retrieved in an application for displaying images, according to non-limiting embodiments; and

Fig. 15 depicts a flow chart of a method for generating and updating a list of images at a portable electronic device, according to non-limiting embodiments.

### DETAILED DESCRIPTION OF THE EMBODIMENTS

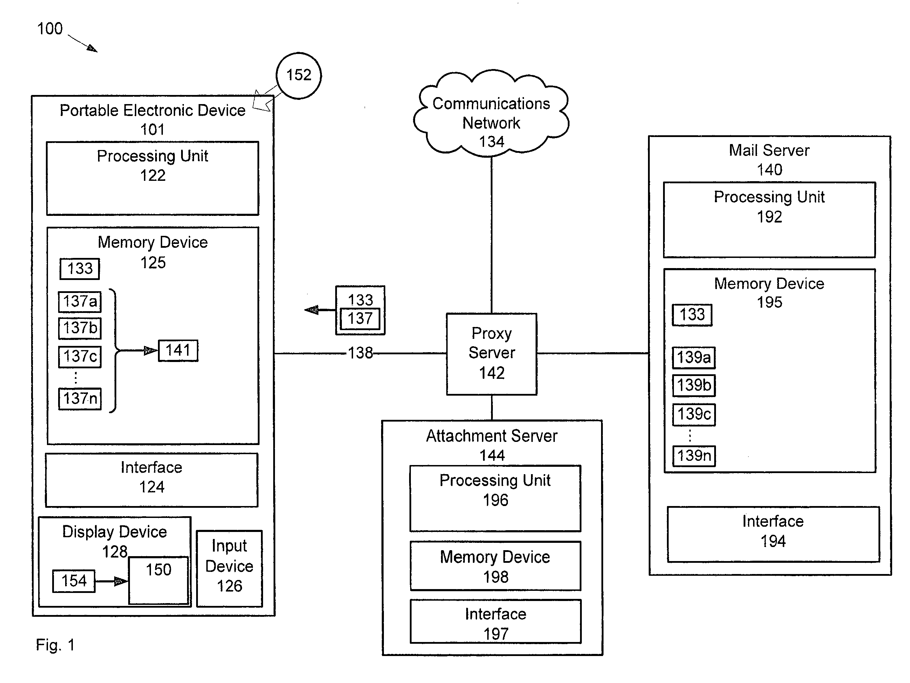

Fig. 1 depicts a system 100 comprising a portable electronic device 101 for processing images, referred to herein interchangeably as portable electronic device 101 and device 101. Device 101 generally comprising a processing unit 122 interconnected with a memory device 125, an input device 126 and a display device 128. Device 101 is enabled to receive a message 133 from a communications network 134, for example via a proxy server 142 and a mail server 140, as described below. Message 133 can comprise at least one of message data, e-mail data, instant messaging data, MMS (multimedia messaging service) data, SMS (short message service) data, and texting data. However, in exemplary embodiments described hereafter, message 133 will be described with respect to e-mails, though this is not to be considered unduly limiting. Furthermore, it is understood that similar methods and systems comprising other message data are within the scope of present embodiments. Memory device 125 is enabled to store message 133, described below. While only message 133 is depicted in Fig. 1, it is understood that memory device 125 can store any suitable number of sets of incoming data, one for each message received for example.

In any event, message 133 comprises a list of indicators 137a, 137b, 137c,...137n (generically an indicator 137, and collectively indicators 137) of attachments 139a, 139b, 139c...139n (generically an attachment 139, and collectively attachments 139) stored at a mail server 140 (and/or an attachment server 144). For example, message 133 can be routed to device 101 via proxy server 142, proxy server 142 in communication with mail server 140. In general proxy server 142 handles client requests from portable electronic device 101 for documents stored within mail server 140 and/or attachment server 144. In general, attachments 139 are stored at mail server 140, and when a given attachment 139 is requested by portable electronic device 101, the given attachment 139 is transferred to attachment server 144, as mediated by proxy server 142, where it is pre-processed for viewing at portable electronic device 101. Attachment server 144 then communicates with proxy server 142 to transmit the pre-processed given attachment 139 to portable electronic device 101 so as to enable attachments that are received in email messages to be viewed, e.g. via an attachment viewer at portable electronic device 101. While only one attachment server 144 is shown for illustration purposes, it is understood that attachment server 144 can alternatively comprise a network of attachment servers. Sources for the attachments stored within attachment server 144 include mail server 140, and may include a web server, IM server, etc. A copy of the pre-processed given attachment 139 can be stored at attachment server for a given period of time. In the following description, while downloading of attachments 139 from mail server 140 is described, it is understood that such downloading can be mediated by proxy server 142 and that pre-processing of an attachment at attachment server 144 can occur.

In any event when message 133 is processed at mail server 140, attachments 139 are replaced with indicators 137, and attachments 139 stored at mail server 140. This prevents bandwidth being wasted transmitting attachments 139 that may or may not be selected for processing at device 101.

Each indicator 137 generally identifies a corresponding attachment 139 such that the corresponding attachment 139 can be retrieved from mail server 140 (and/or attachment server 144 and/or proxy server 142 as described above) via a link 138. Each indicator 137 can hence comprise a name of a corresponding attachment 139 and/or an alphanumeric identifier and/or metadata identifying the corresponding attachment 139. In exemplary embodiments, each indicator 137 can comprise a name of a corresponding attachment 139 as provided in Table 1:

**Table 1**

| | |
|---|---|
| TesterBackup-(2009-03-17).jpg | |
| Map20.jpg | |
| Copy of Directions.doc | |
| Square.JPG | |
| Test J2ME test.jpg | |
| Identify.jpg | |
| TestingPictures.zip | |
| Fig13 .jpg | |
| Fig14 .jpg | |
| Fig15 .jpg | |
| Fig16 .jpg | |
| Fig17.jpg | |
| [Fig1 .jpg | |

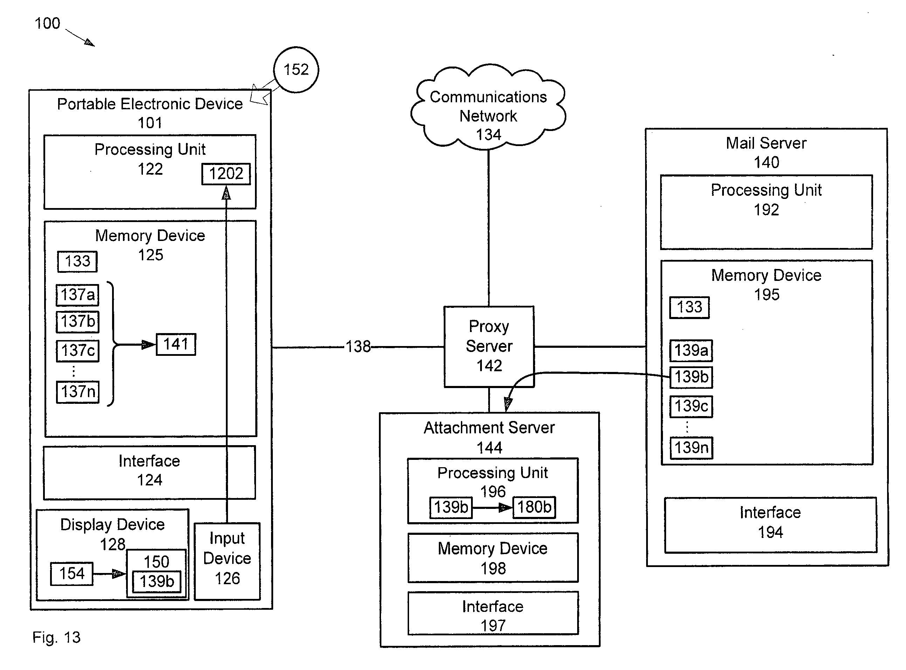

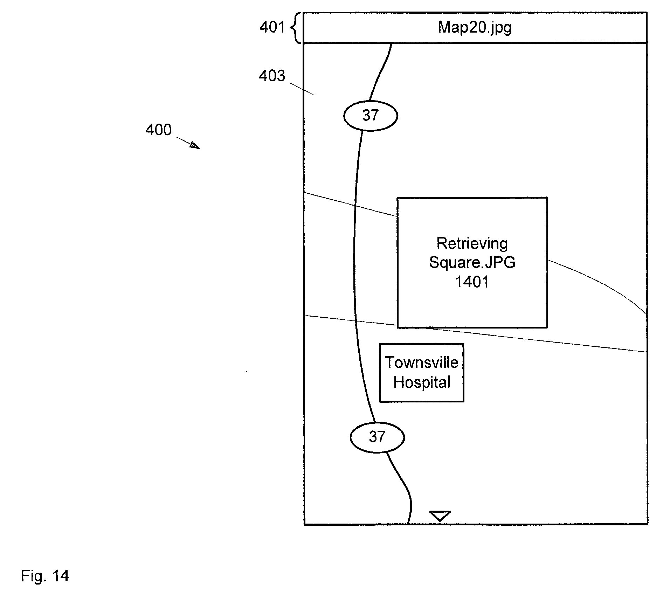

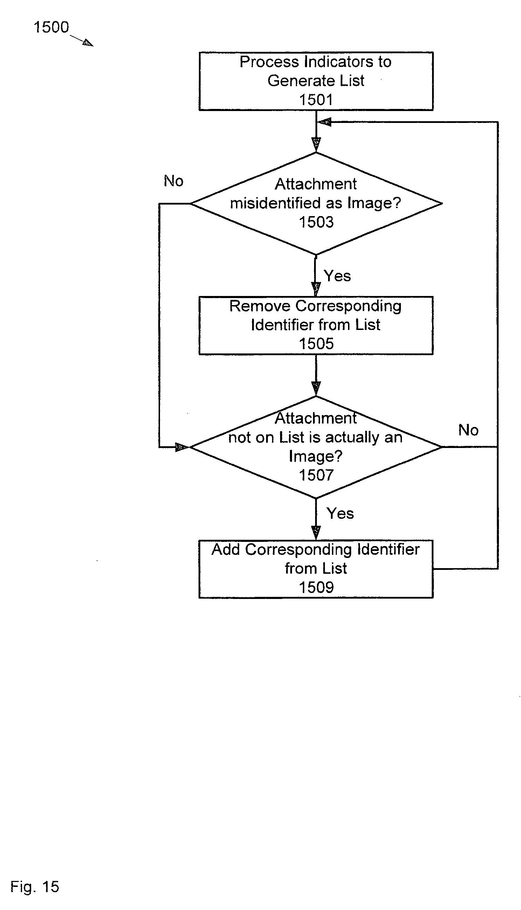

From Table 1, it is understood that, in exemplary embodiments, that at least seven (7) attachments 139 are associated with message 133 corresponding to the following names: "TesterBackup-(2009-03-17).jpg"; "Map20.jpg"; "Copy of Directions.doc"; "Square.JPG"; "Test J2ME test.jpg"; "Identify.jpg"; and "TestingPictures.zip". Other embodiments can include any suitable number of attachments and the number attachments is hence not to be considered limiting. Furthermore, it is understood that the attachment "TestingPictures.zip" comprises a compressed zip file with six (6) files compressed therein: "Fig13 .jpg"; "Fig14 .jpg"; "Fig15 .jpg"; "Fig16.jpg"; "Fig17.jpg"; and "Fig18.jpg". Each attachment 139, including files stored in the compressed zip file, are hence identified and understood to be stored at mail server 140. Furthermore, "TestingPictures.zip" is further understood to comprise an archive file.

In some embodiments, each attachment 139 identified in Table 1 can further be recognized a numeric identifier, assigned to it by mail server 140, and an archive indicator when stored in an archive file such as "TestingPictures.zip".

Furthermore, it is understood that each attachment 139 identified in Table 1 can be downloaded from mail server 140 and processed at device 101. For attachments stored in compressed zip file "TestingPictures.zip", the entire file "TestingPictures.zip" can be downloaded, or each file within "TestingPictures.zip" can be downloaded individually.

It is yet further understood that at least a subset of attachments 139 comprise images, for example image files. In some embodiments, attachments 139 can be identified as images by processing indicators 137: for example, each indicator 137 in Table 1 comprises an extension, such as "jpg", "JPG", "doc", "zip", each extension associated with a given type of file. For example, it is understood that "jpg" and "JPG" are each extensions associated with image files in the JPEG (Joint Photographic Experts Group) format; "doc" is an extension associated with document files in a WORD™ format (e.g. from Microsoft™ of One Microsoft Way, Redmond, WA 98052-7329 USA); and "zip" is an extension associated with files that have compressed using a compression application, such as WinZip™ (e.g. from WinZip Computing, PO Box 540, Mansfield, CT 06268, USA). However, each of these extensions are substantially non-limiting and are meant to be merely exemplary; other types of extensions are within the scope of present embodiments, for example other extensions associated with images, including but not limited to "tif", "bmp", and the like. In general, it is understood that device 101 is enabled to display each attachment 139 having an extension that identifies it as an image, e.g. via a suitable image viewing application.

In any event, by processing each indicator 139 to determine an extension, device 101 can identify each attachment 139 as an image or not an image. From this, a list 141 of images can be generated. Returning to the exemplary embodiment of Table 1, list 141 can comprise the contents of Table 2:

**Table 2**

| |
|---|
| TesterBackup-(2009-03-17).jpg |
| Map20.jpg |
| Square.JPG |
| Test J 2 M E test.jpg |
| Identify.jpg |
| Fig13 .jpg |
| Fig14 .jpg |
| Fig15 .jpg |
| Fig16.jpg |
| Fig17.jpg |
| Fig1 .jpg |

Table 2 is understood to be similar to Table 1, however the files "Copy of Directions.doc" and "TestingPictures.zip" are not images. Rather, only those files identified as images are included in Table 2, i.e. each file having an extension "jpg" or "JPG". It is understood that list 141 includes files that are compressed in zip file "TestingPictures.zip".

Processing unit 122 is generally enabled to control display device 128 to provide a representation 150 of message 133 and indicators 137, for example, in conjunction with processing an application 152 (which can be stored in memory device 125 and processed by processing unit 122). Application 152 can comprise at least one of a messaging application, an e-mail application, an instant messaging application, an MMS (multimedia messaging service) application, an SMS (short message service) application, and a texting application, application 152 generally compatible with message 133. Upon processing application 152, processing unit 122 can control circuitry 154 in display device 128 to provide a representation 150 of message 133 and indicators 137 in application 152.

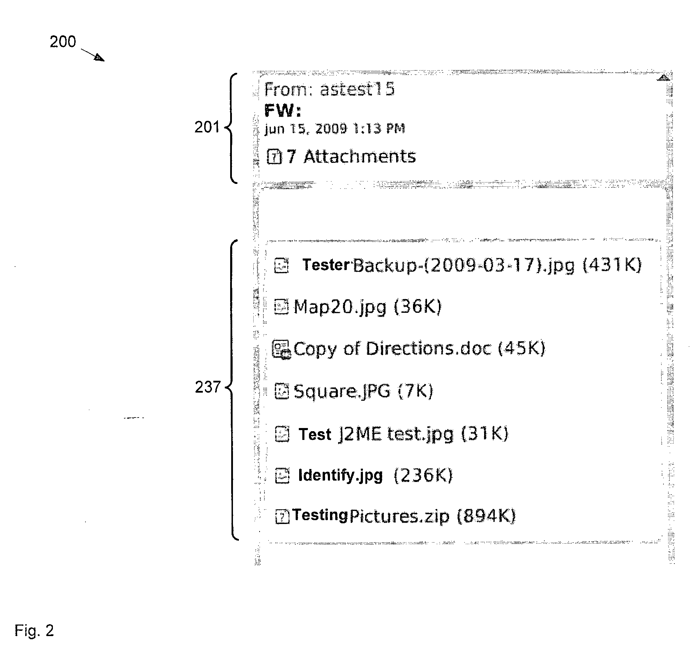

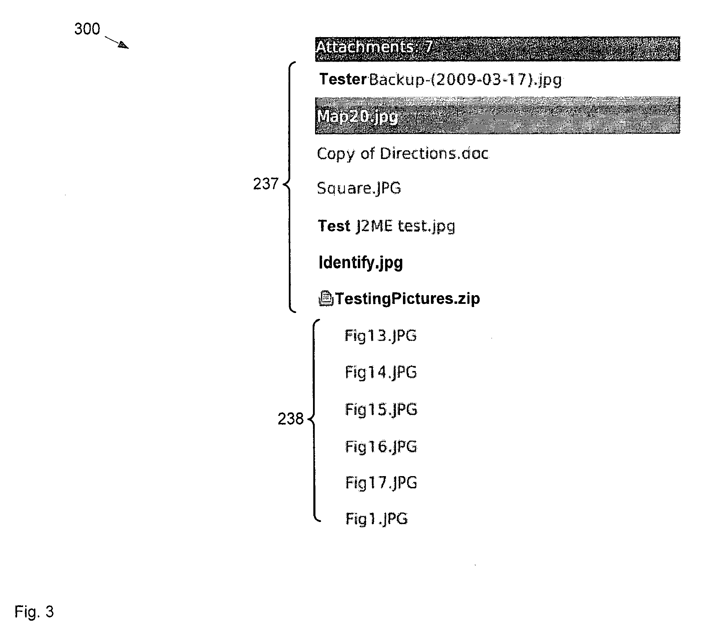

For example, Fig. 2 depicts a representation 200 of application 152, according to exemplary non-limiting embodiments. In some embodiments, representation 150 comprises representation 200. While in embodiments depicted in Fig. 2, application 152 comprises an e-mail application, it is understood that in other embodiments, application 152 can comprise any suitable application. In any event, from Fig. 2 it is understood that representation 200 comprises a header section 201 of an e-mail identifying from who and/or or where the e-mail is from (e.g. "astest15"), a date, and the number of attachments ("7 Attachments"). Representation 200 further comprises indicators 237 of the attachments, similar to the contents of Table 1, though the contents of the compressed zip file "TestingPictures.zip" are not provided in indictors 237. However, indicators 237 can also be viewed in an attachment view, as depicted in representation 300 of Fig. 3 (in some embodiments, representation 150 comprises representation 300); in this view, indicators 238 of the files compressed within "TestingPictures.zip" are also provided. In any event, indicators 137 can comprise indicators 237, 238.

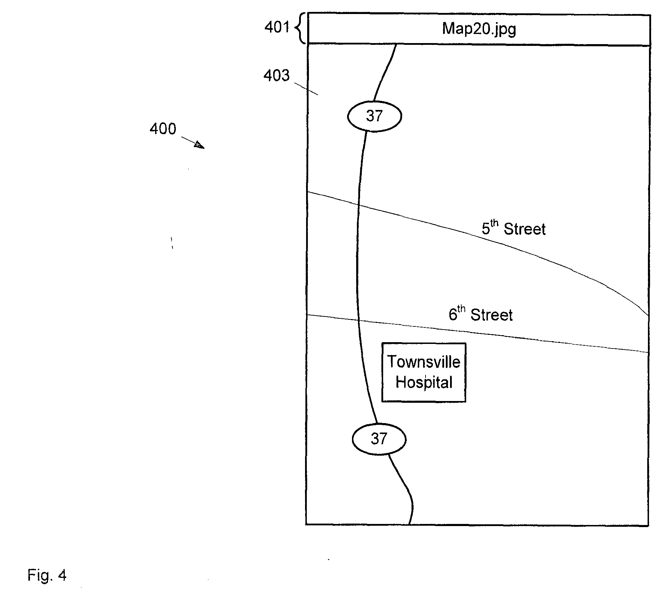

Also depicted in Fig. 3 is selection of an indicator 237 corresponding to an attachment "Map20.jpg", as shown by "Map20.jpg" being highlighted: selection of an indicator 237, 238 can occur via input device 126 which can comprise a keyboard, a pointing device, a touchscreen or the like, as described in further detail below. In any event, selection of an indicator 237, 238 is not to be considered limiting and can occur via any suitable selection method. In any event, once "Map20.jpg" is selected, the corresponding attachment 139 can be downloaded via link 138 (e.g. from mail server 140 and attachment server 144, as mediated by proxy server 142 as described above); processing unit 122 can then process the corresponding attachment 139 and control display device 128 to provide an associated image 403. For example, Fig. 4 depicts a representation 400 of image 403 associated with attachment "Map20.jpg" along with a header portion 401 identifying "Map20.jpg". In some embodiments, representation 150 comprises representation 400.

In the prior art, to retrieve and provide a next attachment, input data would need to be received to back out of representation 400 to return to representation 300 (or representation 200). However, in present embodiments, further input data is received from input device 126 while image 403 is displayed at display device 128, the further input data indicative that a next one of the images is to be displayed. Hence, processing unit 122 processes list 141 to determine a next image in attachments 139 and automatically cause the next image to be displayed at display device 128.

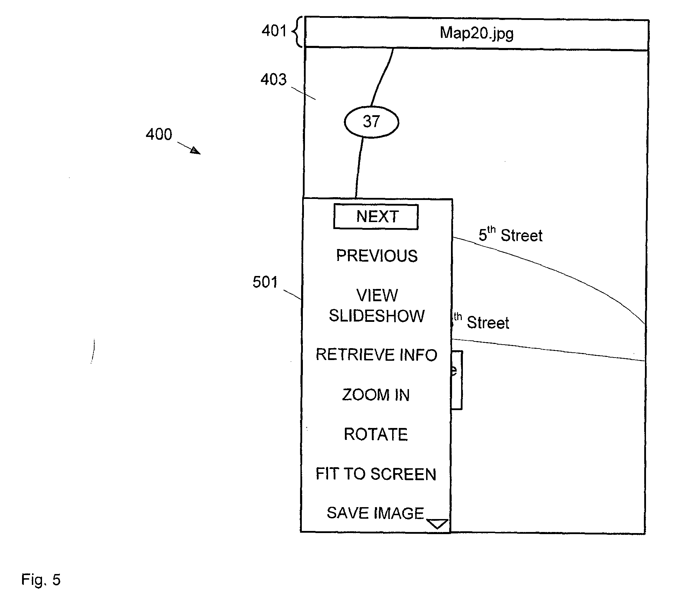

For example, as depicted in Fig. 5, which is substantially similar to Fig. 4 with like elements having like numbers, input data can be received which causes a menu 501 to be provided within representation 400, menu 501 providing a plurality of possible actions that can be implemented while image 403 is being displayed. As depicted, a "NEXT" option is selected. Alternatively, when input device 126 comprises a touch screen, further input data can comprise a select event and/or a swipe event.

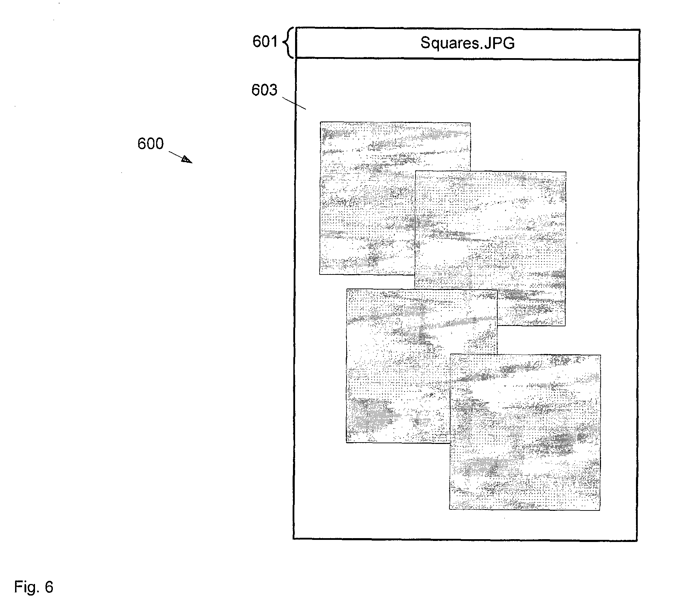

In any event, once the further input data is received, the next image is requested from mail server 140 and processed by processing unit 122 to control display device 126 to display the next image, for example the next image in list 141: from Table 2, "Square.JPG". As depicted in representation 600 of Fig. 6, display device 128 is then automatically controlled by processing unit 122 to display image 603 associated with attachment "Square.JPG" (along with a header 601 identifying attachment "Square.JPG") Fig. 6, without returning to representation 200 of Fig. 2 or representation 300 of Fig. 3. In some embodiments, representation 150 comprises representation 600.

Yet further input data can be received which causes yet a next image to be downloaded and displayed without returning to representation 200 of Fig. 2 or representation 300 of Fig. 3. In this manner, all of the images in list 141 (e.g. in Table 2) can be displayed. Returning to Fig. 5, menu 501 can further be invoked to return to a previous image and/or advance to a next image. When an attachment 139 associated with the image has been previously requested and stored in memory device 125, as will be described below, the image can be retrieved from memory device 125 rather than mail server 140 (and/or attachment server 144). When the end of list 141 is reached, in some embodiments, selection of the "NEXT menu item causes list 141 to wrap around to the first image on list 141; in other embodiments, when the end of list 141 is reached, the "NEXT" menu item is not provided as a selectable option in menu 501, rather the "PREVIOUS" menu item can be selected.

Furthermore, if an a menu item "VIEW SLIDESHOW" is selected from menu 501, then further input data is not needed; rather processing unit 122 causes the next image to be automatically retrieved from mail server 140 (or retrieved from memory device 125), after a suitable delay. In some of these embodiments, the delay can be manually configured at device 101.

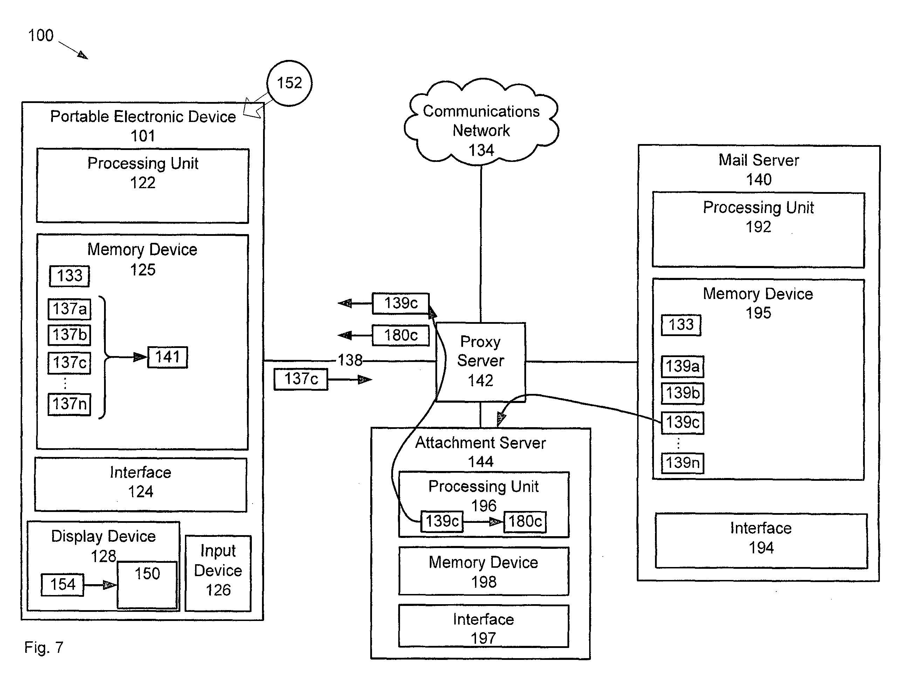

In yet further embodiments, one or more of the indicators 137 in list 141 can be associated with an attachment that has been misidentified as an image. For example, from Table 2, "Test J2ME test.jpg" is identified as an image due to the extension "jpg". However, in exemplary embodiments, "Test J2ME test.jpg" can be a spreadsheet rather than an image. Hence when device 101 attempts to retrieve "Test J2ME test.jpg" from mail server 140, it is determined that "Test J2ME test.jpg" is actually not an image. Such an identification can be based either on at least one of mail server 140 and processing unit 122 attempting to render "Test J2ME test.jpg" as an image file. In exemplary non-limiting embodiments, as depicted in Fig. 7 (substantially similar to Fig. 1 with like elements having like numbers), device 101 requests "Test J2ME test.jpg" by transmitting an associated indicator, e.g. indicator 137c, to mail server 140 via link 138.

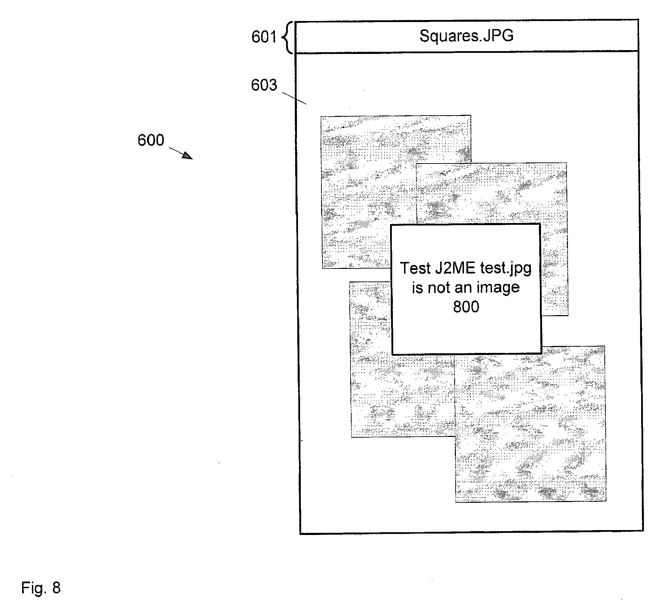

This causes the associated attachment 139c to be pre-processed at attachment server 144, where it is determined that attachment 139c is not an image file. Rather an attachment type identifier 180c can be determined and returned to device 101 via link 138 (with or without attachment 139c), device 101 being enabled to determine what type of attachment is attachment 139c from identifier 180c. Alternatively, in some embodiments, mail server 140 can be enabled to determine attachment type identifier 180c from attachment 139c. When attachment 139c is not an image (i.e. "Test J2ME test.jpg" was misidentified as a JPEG image file), display device 128 is controlled to display a warning 800 indicating such, as depicted in Fig. 8, Fig. 8 being substantially similar to Fig. 6 with like elements having like numbers.

Furthermore, list 141 is modified to remove "Test J2ME test.jpg" there from. For example, list 141 then comprises Table 3, substantially similar to Table 2, however with "Test J2ME test.jpg" removed:

**Table 3**

| |
|---|
| TesterBackup-(2009-03-17).jpg |
| Map20.jpg |
| Square.JPG |
| Identify.jpg |
| Fig13 .jpg |
| Fig14 .jpg |
| Fig15 .jpg |
| Fig16.jpg |
| ]Fig17.jpg |
| Fig1 .jpg |

Selection of the "Next" menu item again (or detection of an equivalent select event or sliding event) causes the next image in list 141 (e.g. "Identify.jpg") to be requested and displayed. Yet another selection of the "Next" menu item, or the equivalent, causes device 101 to request and display "Fig13 .JPG" file, the first entry in compressed zip file "TestingPictures.zip".

Returning to Fig. 5, selection of the "PREVIOUS" menu item causes the attachment "TesterBackup-(2009-03-17).jpg" to be retrieved from mail server 140. However, in exemplary embodiments, "TesterBackup-(2009-03-17).jpg" has also been misidentified as an image. Once again, a warning screen is provided and "TesterBackup-(2009-03-17).jpg" is removed from list 141, as in Table 4:

**Table 4**

| |
|---|
| Map20.jpg |
| Square.JPG |
| Identify.jpg |
| Fig13 .jpg |
| Fig14 .jpg |
| Fig15 .jpg |
| Fig16.jpg |
| Fig17.jpg |
| Fig1 .jpg |

Returning now to Fig. 3, embodiments where an attachment has been misidentified as not an image file are now considered. For example, "Copy of Directions.doc" is identified as a WORD file, and hence the corresponding indicator is not included in list 141 (e.g. see any of Tables 2 to 4).

However, it can be determined that "Copy of Directions.doc" is actually an image file. For example, when "Copy of Directions.doc" is requested from mail server 140 (e.g. "Copy of Directions.doc" is selected in representation 300), attachment server 144 ( or alternatively mail server 140) can determine that "Copy of Directions.doc" is an image and return "Copy of Directions.doc" with an attachment type identifier, similar to attachment type identifier 180c, which identifies "Copy of Directions.doc" as an image. In these embodiments, list 141 is then modified as in Table 5, to include "Copy of Directions.doc":

**Table 5**

| |
|---|
| Map20.jpg |
| Copy of Directions.doc |
| Square.JPG |
| Identify.jpg |
| Fig13 .jpg |
| Fig14 .jpg |
| Fig15 .jpg |
| Fig16.jpg |
| Fig17.jpg |
| Fig1.jpg |

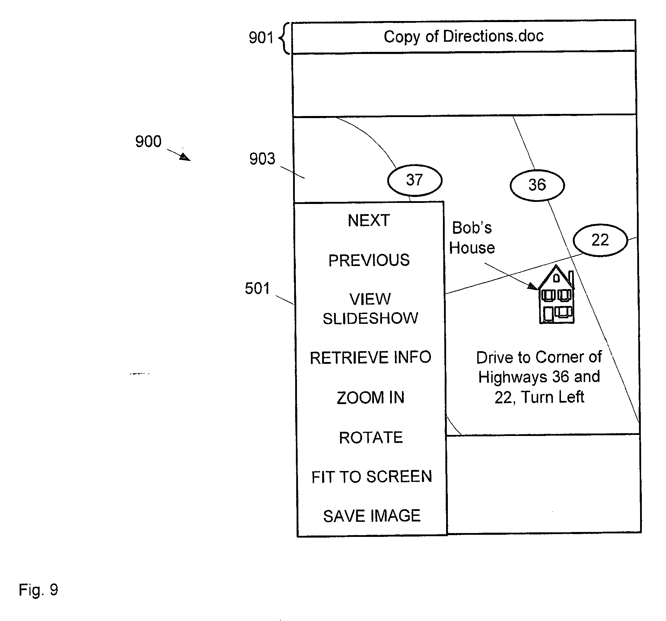

An image 903 of "Copy of Directions.doc" can than be provided at display device 128 in a representation 900, as depicted in Fig. 9, along with menu 501 (and a header 901), so that images can be displayed without having to return to representation 200 and/or representation 300. In some embodiments, representation 150 comprises representation 900.

Returning now to Fig. 1, various elements of system 100 are now described in more detail.

It is understood that link 138 can comprise any suitable combination of wired and wireless links as desired, such that portable electronic device 101 can receive data from mail server 140 and/or communicate with mail server 140, e.g. via proxy server 142. Hence, link 138 can comprise any suitable combination of wired or wireless communication network, including but not limited to packet based networks, the internet, a local area network (LAN), a wireless local area network (WLAN), a wide area network (WAN), analog networks, the PSTN (public switched telephone network), cell-phone networks (including but not limited to CDMA (Code division multiple access), GSM (Global System for Mobile communications), UTMS (Universal Mobile Telecommunications System), 1X, Edge and the like), WiFi and WiMax networks.

In general, portable electronic device 101 comprises any suitable portable electronic device, including but not limited to any suitable combination of portable computing devices, personal digital assistants (PDA), wireless communication device, wireless computing device, portable electronic device, and the like. Other suitable computing devices are within the scope of present embodiments.

Processing unit 122 comprises any suitable processor, or combination of processors, including but not limited to a microprocessor, a central processing unit (CPU) and the like. Other suitable processing units are within the scope of present embodiments. In particular, processing unit is enabled to process application 152 which can be stored in memory device 125.

Communication interface 124 comprises any suitable wired and/or wireless communication interface, or combination of communication interfaces, enabled to receive data from mail server 140 and/or communicate with mail server 140 via link 138 (e.g. via proxy server 142). Accordingly, communication interface 124 is enabled to communicate according to any suitable protocol compatible with link 138, including but not limited to wired protocols, wireless protocols, cell-phone protocols, wireless data protocols, packet based protocols, Internet protocols, analog protocols, PSTN protocols, cell phone protocols, WiFi protocols, WiMax protocols and the like, and/or a combination. Other suitable communication interfaces and/or protocols are within the scope of present embodiments.

Input device 126 is generally enabled to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present embodiments. In embodiments where input device 126 comprises a touch screen, processing unit 122 is enabled to detect select events and/or swipe events at input device 126.

Memory device 125 can comprise any suitable memory device, including but not limited to any suitable one of or combination of volatile memory, non-volatile memory, random access memory (RAM), read-only memory (ROM), hard drive, optical drive, flash memory, magnetic computer storage devices (e.g. hard disks, floppy disks, and magnetic tape), optical discs, and the like. Other suitable memory devices are within the scope of present embodiments. In particular, memory device 125 is enabled to store message 133, indicators 137, attachments 139, as well as application 152.

Display device 128 comprises circuitry 154 for generating representations of data, for example representation 150 of application 152. Display device 128 can include any suitable one of or combination of CRT (cathode ray tube) and/or flat panel displays (e.g. LCD (liquid crystal display), plasma, OLED (organic light emitting diode), capacitive or resistive touchscreens, and the like). Circuitry 154 can include any suitable combination of circuitry for controlling the CRT and/or flat panel displays etc., including but not limited to display buffers, transistors, electron beam controllers, LCD cells, plasmas cells, phosphors etc. In particular, display device 128 and circuitry 154 can be controlled by processing unit 122 to generate representation 150.

Mail server 140 comprises a processing unit 192 interconnected with a communications interface 194 and memory device 195, which can be respectively similar to processing unit 122, interface 124 and memory device 125.

Attachment server 144 comprises a processing unit 196 interconnected with a communications interface 197 and memory device 198, which can be respectively similar to processing unit 122, interface 124 and memory device 125. However processing unit 196 can be enabled to determined attachment type (e.g. whether an attachment is an image or not an image).

While not depicted, it is understood that proxy server 142 comprises a processing unit interconnected with a communications interface and memory device, which can be respectively similar to processing unit 122, interface 124 and memory device 125.

It is also understood that the functionality of mail server 140, proxy server 142 and attachment server 144 can be combined in one or more servers, and/or that mail server 140, proxy server 142 and attachment server 144 (or the equivalent) can be located local or remote from each other, as desired.

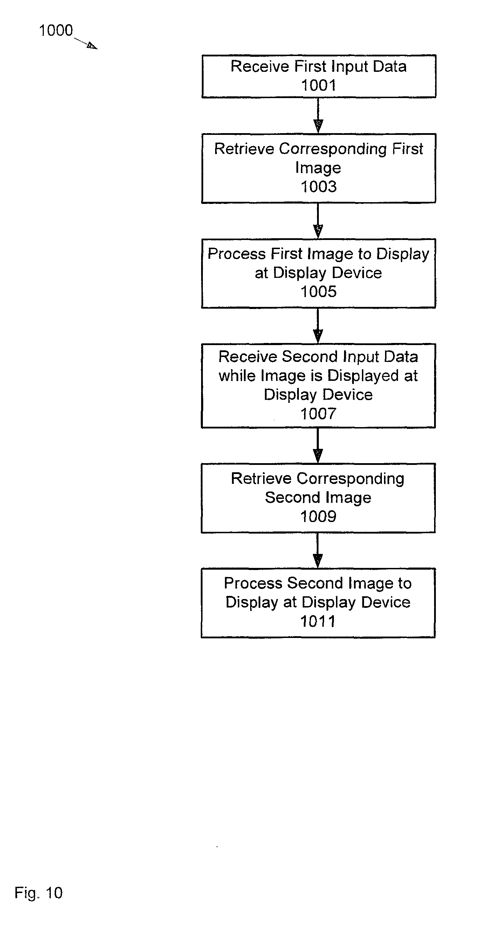

Attention is now directed to Figure 10 which depicts a method 1000 for processing images at a portable electronic device. In order to assist in the explanation of method 1000, it will be assumed that method 1000 is performed using system 100. Furthermore, the following discussion of method 1000 will lead to a further understanding of system 100 and its various components. However, it is to be understood that system 100 and/or method 1000 can be varied, and need not work exactly as discussed herein in conjunction with each other, and that such variations are within the scope of present embodiments.

In method 1000, it is understood that images are stored electronically at mail server 140 as attachments 139 to message data 133, message data 133 received at portable electronic device 101 with indicators 137 identifying corresponding attachments 139 to message data 133, as described above.

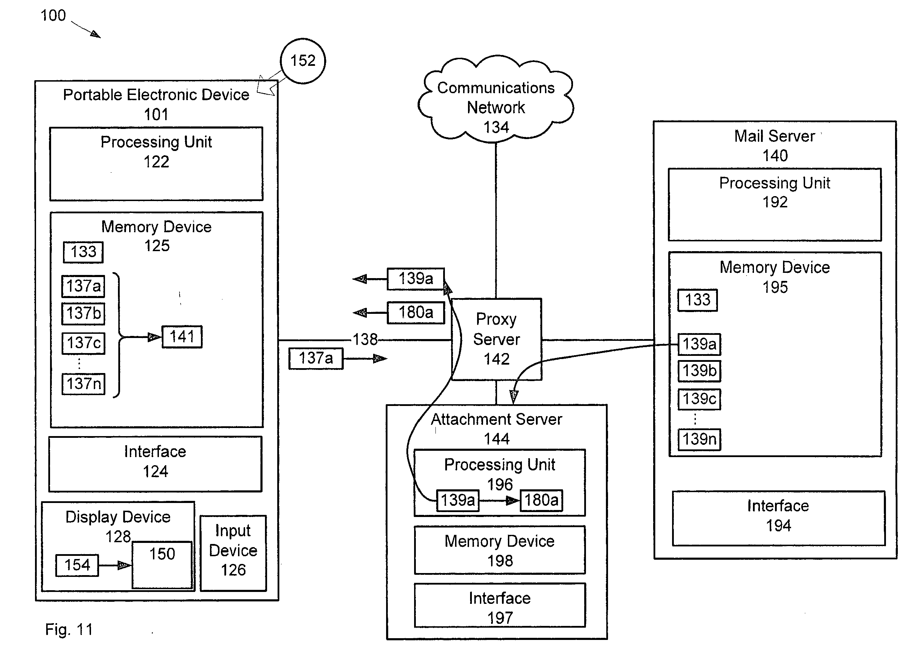

At step 1001, first input data 1101 is received from input device 126, as depicted in Fig. 11 (substantially similar to Fig. 1, with like elements having like numbers). First input data 1101 is indicative that one of indicators 137, corresponding to one of images, has been selected, for example from list 141 via a select event. In exemplary embodiments, indicator 137a can be selected, as represented by the selection of "Map20.jpg" in Fig. 3. In other embodiments, indicator 137a can be selected via a suitable combination of select events, slide events and the like.

At step 1003, one of images corresponding to the indicator 137 selected at step 1001is retrieved from mail server 140. For example, the selected indicator, e.g. indicator 137a, is transmitted to mail server 140 via link 138, and mail server 140 retrieves the corresponding attachment 139a from memory device 195 and transmits attachment 139a to device 101 via link 138 and/or attachment server 144 as mediated by proxy server 142. In some embodiments, attachment server 144 can pre-process attachment 139a to determine a corresponding attachment type identifier 180a, similar to identifier 180c described above, and/or render attachment 139a for display at display device 128.

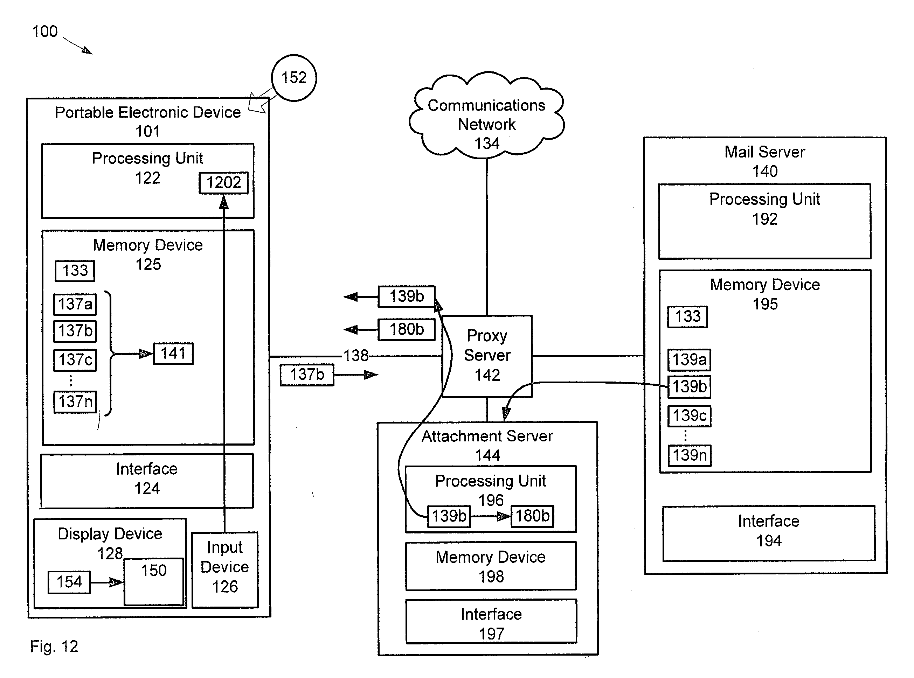

At step 1005, the image received in attachment 139a is processed at processing unit 122, such that the image corresponding to the indicator 137 selected at step 1001 is displayed at display device 128 (e.g. as depicted in Fig. 4). The state of device 101 when the image corresponding to the indicator 137 selected at step 1001 is displayed at display device 128 is depicted in Fig. 12 (substantially similar to Fig. 1, with like elements having like number): from Fig. 12 it is understood that display device 128 and/or circuitry 154, is being controlled such that representation 150 comprises the image in attachment 139a.

At step 1007, second input data 1202 is received, from input device 126, indicative that a next one of the images is to be displayed, second input data 1202 received while the image corresponding to the indicator 137 selected at step 1001 is displayed at display device 128. Receipt of second input data 1202 while the image corresponding to the indicator 137 selected at step 1001 is displayed at display device 128 is depicted in Fig. 12 (and further depicted in Fig. 4). Furthermore, Fig. 12 depicts a non-limiting example of the next one of the images to be displayed comprises an image in attachment 139b; hence second input data 1202 comprises selection of indicator 137b.

At step 1009, the next one of images corresponding to the indicator 137 selected at step 1007 is retrieved from mail server 140. For example, the selected indicator, e.g. indicator 137b, is transmitted to mail server 140 via link 138, and mail server 140 retrieves the corresponding attachment 139b from memory device 195 and transmits attachment 139b to device 101 via link 138 as depicted in Fig. 12. In some embodiments, attachment 139b is pre-processed at attachment server 144 to determine a corresponding attachment type identifier 180b, similar to identifier 180c described above, and/or render attachment 139b for display at display device 128.

In some embodiments, as depicted in Fig. 14, substantially similar to Fig. 4, with like elements having like numbers, an indicator 1401 can be provided indicating that the next image (e.g. "Square.JPG") is being retrieved. Indicator 1401 can be provided when there is a delay in retrieving the next image, for example due to network traffic and/or a size of the next image.

Returning to Fig. 10, the image received in attachment 139b is processed at processing unit 122, such that the image corresponding to the indicator 137 selected at step 1007 is displayed at display device 128 (e.g. as depicted in Fig. 6).

In this manner, images attached to a message can be viewed without undue processing of input data at device 101. Furthermore, computing resources associated with display device 101 are used more efficiently as method 1000 obviates the need to back out of an image view to return to a view of an email and/or a list of attachments such that another image can be selected for viewing. Rather, the number of screens of data that are generated and stored in a display cache is reduced as advancement from a first image to a next image is enabled without having to regenerate a view of the message and/or a list of attachments.

In some embodiments of method 1000, receipt of second input data 1202 at step 1007 is further indicative that images are to be automatically retrieved from mail server 140 and displayed at display device 128 in a sequence. In these embodiments, device 101 enters a slide show mode while the first image retrieved from mail server 140 is displayed at display device 128. In the slide show mode, images are automatically retrieved from mail server 140 (via proxy server 142 and attachment server 144 as desired) and displayed in sequence at display device 128. Any suitable delay can occur between displaying images. In some embodiments, the delay can be configured at device 101. In other embodiments, the delay can vary depending on the time for retrieving a next image from mail server 140 (e.g. the delay can increase due to variances in link 138 and/or a size of the next image). Furthermore, the slide show mode can be interrupted via receipt of any additional input data at input device 126.

In some embodiments of method 1000, images retrieved from mail server 140 can be stored at memory device 125 upon retrieval from mail server 140. In some of these embodiments, third input data can be received indicative that a previous one of the images is to be displayed, third input data received while an image is being displayed at display device 128. In these embodiments, the previous one of the images is retrieved from memory device 125 and processed at processing device 122, such that the previous one of the images is displayed at display device 128.

Attention is now directed to Figure 15 which depicts a method 1500 for generating and updating a list of images at a portable electronic device. In order to assist in the explanation of method 1500, it will be assumed that method 1500 is performed using system 100. Furthermore, the following discussion of method 1500 will lead to a further understanding of system 100 and its various components. However, it is to be understood that system 100 and/or method 1500 can be varied, and need not work exactly as discussed herein in conjunction with each other, and that such variations are within the scope of present embodiments.

It is further understood that method 1500 can be implemented in parallel with method 1000. For example, method 1500 can be implemented to generate list 141 which can be used to identify a next one of images at step 1007 rather than receiving second input data 1202.

At step 1501, indicators 137 received with message 133 are processed to generate list 141. List 141 generally comprises a subset of indicators 137 and can be based on extensions found in each indicator 137, as described above.

At step 1503, it is determined whether a given indicator 137 on list 141 corresponds to an attachment 139 that has been misidentified as an image. Such a determination can be made when attachment server 144 transmits an attachment type identifier, as described above, and/or when processing unit 122 attempts to process an image (e.g. at steps 1005 or 1011 of method 1000) and is unable to do so and/or encounters unexpected data in attachment 139 and/or when a non-recoverable server error is encountered from mail server 140 and/or attachment server 144 (e.g. format not supported). When it is determined that a given indicator 137 on list 141 corresponds to an attachment 139 that has been misidentified as an image an image, at step 1505, the corresponding given indicator 137 is removed from list 141.

At step 1507, it is determined whether an attachment 139 identified by a corresponding indicator 137 which is not on list 141 is actually image, the attachment 139 having been initially misidentified as not am image. Such a determination can be made when attachment server 144 transmits an attachment type identifier, as described above, and/or when processing unit 122 attempts to process an attachment 139 that has been retrieved from mail server 140, and encounters image data. When it is determined that a given indicator 137 not on lists 141 corresponds to an image, at step 1505, the corresponding given indicator 137 is added to list 141, such that the attachment 139 identified by the given corresponding indicator 137 can be displayed as image.

Steps 1503 to1509 can occur in any suitable order, and at any suitable time before, during or after implementation of method 1000.

In this manner, list 141 becomes dynamic and can be updated at any suitable time. Hence, when method 1000 is implemented, processing of "NEXT" and/or "PREVIOUS" commands to advance through images, without returning to an e-mail view and/or a list of attachments view, causes the next (or previous) image in list 141 to be displayed; if an attachment that is not an image is encountered, it is removed from list 141, such advancing to the attachment is no longer an option. Furthermore, automatically adding misidentified attachments to list 141 obviates the need to return to the e-mail view and/or the list of attachments view.

Furthermore, methods 1000 and 1500 can include any suitable number of additional steps to implement additional features, including but not limited to:

a. showing/hiding a title bar (e.g. header 401);

b. shortcut actions from a touch screen and/or a keyboard (e.g. enabling slide events and/or select events and/or keys on a keyboard to cause actions on a displayed image and/or within the slideshow mode );

c. a non-recoverable server error (like format not supported) from mail server 140 and/or attachment server 144 is encountered: in this case the associated image is not displayed (and list 141 is updated accordingly, see below);

d. a recoverable error from mail server 140 and/or attachment server 144 and/or proxy server 142 is encountered, such as mail server 140 and/or attachment server 144 and/or proxy server 142 being temporarily stopped or busy: in these embodiments the attachment/image retrieval can be retried later with a possible different result;

e. features such as "Send Image as E-Mail", "Zoom Out", "Zoom In", "Rotate Image" can be implemented in a menu, such as menu 501, and/or in shortcut keys, toolbar buttons, while an image is being displayed;

f. the available features in e. can be updated based on changes to list 141 and/or actions at device 101 (e.g. Zoom Out has been applied as much as possible, and/or there is no Next Image and/or there is no Previous Image as the end or beginning of list 141 has been reached);

g. scaling an image to a preset size, such as an original size;

h. slideshow mode can be interrupted if non-recoverable errors are encountered;

i. recoverable errors are bypassed in slideshow mode and the next image in lists 141 is retrieved;

h. an auto-restart function in slideshow mode in which device 101 automatically returns to displaying the first image in list 141 when the last image has been reached;

j. advancing to the next (or previous) page in a multipage image attachment when a Next (or Previous) command is received;

h. autohide a title bar/toolbar after a given period of time to maximize display screen space;

j. provide a tooltip showing information that would otherwise be in a titlebar/toolbar;

k. converting Non-image files to image files at the attachment server 144 (and/or the mail server 140) such that when a "Next" or "Previous" option is selected, as described above, a non-image file is converted to an image file, rather than result in an error and/or a warning such as warning 800; and,

I. when an image is being downloaded, portions of the image can be displayed as portions of the image arrive at portable electronic device 101 (e.g. a "fuzzy image"): furthermore, portions of the image can be downloaded, e.g. with message data 133, and the rest of the image retrieved only when the image is actually viewed such that the image can be displayed and retrieved faster when viewed. For example, 25% of the image can be downloaded with message data 133 and when the image is viewed the 25% can be displayed while the rest of the image is retrieved. Furthermore, the downloading of subsequent images can be staged, such that 75% of the next image is retrieved, 50% of the following image and 25% of the following image. Then when the 75% image is viewed, the remaining portion is retrieved, as well as further portions of the following images.

Those skilled in the art will appreciate that in some embodiments, the functionality of device 101 can be implemented using pre-programmed hardware or firmware elements (e.g., application specific integrated circuits (ASICs), electrically erasable programmable read-only memories (EEPROMs), etc.), or other related components. In other embodiments, the functionality of device 101 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Alternatively, the computer-readable program code could be stored remotely but transmittable to these components via a modem or other interface device connected to a network (including, without limitation, the Internet) over a transmission medium. The transmission medium can be either a non-wireless medium (e.g., optical and/or digital and/or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method for processing images at a portable electronic device (101), said images stored electronically at a remote server (140, 144) as attachments to message data, said message data received at said portable electronic device (101) with said attachments replaced by indicators identifying corresponding attachments to said message data, said portable electronic device (101) comprising a processing unit (122) interconnected with an input device (126), and a display device (128), said method comprising:
processing said indicators to identify each attachment as an image or not an image to thereby generate a list of said images at said portable electronic device (101), each one of said indicators comprising a name and an extension of a given file type associated with a corresponding one of said attachments,
said identification based on said extensions, said list comprising only indicators corresponding to attachments identified as images;
receiving first input data, from said input device (126), indicative that one of said indicators, corresponding to one of said attachments identified as images, has been selected;
retrieving said one of said attachments identified as images from said remote server (140, 144) corresponding to a selected said one of said indicators;
determining said selected one of said indicators on said list corresponds to an attachment that has been misidentified as an image and removing said given indicator from said list, said determining based on
pre-processing, at said remote server (140, 144), said attachment corresponding to said selected one of said indicators by rendering said attachment as an image for display at said display device (128),
determining, at said remote server (140, 144), based on said pre-processing, said attachment is not an image, and
transmitting, to said portable electronic device (101), an attachment type identifier;
determining that an attachment identified by a corresponding indicator which is not on said list is an image, said attachment having been initially misidentified, and adding said corresponding indicator to said list such that said attachment identified by said corresponding indicator can be displayed as said image, said determining based on one or more of
pre-processing, at said remote server, said attachment identified by said corresponding indicator that is not on said list, said pre-processing resulting in image data, and transmitting an attachment type identifier to said portable electronic device (101), and
processing, at said processing unit (122), said attachment identified by said corresponding indicator that is not on said list, said processing resulting in image data;
processing said one of said images, at said processing unit (122), such that said one of said images is displayed at said display device (128);
receiving second input data, from said input device (126), indicative that a next one of said images is to be displayed, said second input data received while said one of said images is displayed at said display device (128); in response,
identifying said next one of said images based on said list;
retrieving said next one of said images from said remote server (140, 144);
processing said next one of said images, at said processing device, such that said next one of said images Is displayed at said display device (128).

2. The method of claim 1, wherein said second input data is further indicative that said images are each to be automatically retrieved and displayed at said display device (128) in a sequence.

3. The method of claim 2, further comprising automatically retrieving and displaying each said image in said sequence at said display device (128).

4. The method of any of claims 1 to 3, further comprising storing said images at a memory device (125) at said portable electronic device (101) upon retrieval from said remote server (140, 144).

5. The method of claim 4, further comprising;
receiving third input data, from said input device (126), indicative that a previous one of said images is to be displayed, said third input data received while said next one of said images is displayed at said display device (128);
retrieving said previous one of said images from said memory; and processing said previous one of said images, at said processing device, such that said previous one of said images is displayed at said display device (128).

6. The method of any of claims 1 to 5, wherein said remote server (140, 144) comprises at least one of a mail server (140), an attachment server (144) and a proxy server (142).

7. A system comprising a portable electronic device (101) for processing images and a remote server (140, 144) for electronically storing images as attachments to message data, said message data received at said portable electronic device (101) with indicators identifying corresponding attachments to said message data, said portable electronic device (101) comprising:
a processing unit (122) interconnected with an input device (126), and a display device (128), said processing unit (122) enabled to:
process said indicators to identify each attachment as an image or not an image to thereby generate a list of said images at said portable electronic device (101), each one of said indicators comprising a name and an extension of a given file type associated with a corresponding one of said attachments, said identification based on said extensions, said list comprising only indicators corresponding to attachments identified as images;
receive first input data, from said input device (126), indicative that one of said indicators, corresponding to one of said attachments identified as images, has been selected;
retrieve said one of said attachments identified as images from said remote server (140, 144) corresponding to a selected said one of said indicators;
said remote server (140, 144) being configured to:
determine that said selected one of said indicators on said list corresponds to an attachment that has been misidentified as an image and removing said given indicator from said list, said determining based on
pre-processing, at said remote server (140, 144), said attachment corresponding to said selected one of said indicators by rendering said attachment as an image for display at said display device (128), determining, at said remote server (140, 144), based on said pre-processing, said attachment is not an image, and
transmitting, to said portable electronic device (101), an attachment type identifier;
wherein said processing unit (122) of said portable electronic device (101) is further enabled to:
determine that an attachment identified by a corresponding indicator which is not on said list is an image, said attachment having been initially misidentified, and adding said corresponding indicator to said list such that said attachment identified by said corresponding indicator can be displayed as said image, said determining based on one or more of
pre-processing, at said remote server, said attachment identified by said corresponding indicator that is not on said list, said pre-processing resulting in image data, and transmitting an attachment type identifier to said portable electronic device (101), and
processing, at said processing unit (122), said attachment identified by said corresponding indicator that is not on said list, said processing resulting in image data;
process said one of said images, at said processing unit (122), such that said one of said images is displayed at said display device (128);
receive second input data, from said input device (126), indicative that a next one of said images is to be displayed, said second input data received while said one of said images is displayed at said display device (128); in response,
identify said next one of said images based on said list;
retrieve said next one of said images from said remote server (140,144);
process said next one of said images, at said processing device, such that said next one of said images is displayed at said display device (128).

## Patentansprüche

1. Verfahren zum Verarbeiten von Bildern auf einer tragbaren elektronischen Vorrichtung (101), wobei die Bilder elektronisch an einem entfernten Server (140, 144) als Anhänge an Nachrichtdaten gespeichert sind, wobei die Nachrichtdaten an der tragbaren elektronischen Vorrichtung (101) empfangen werden mit den Anhängen ersetzt durch Indikatoren, die entsprechende Anhänge an die Nachrichtdaten identifizieren, wobei die tragbare elektronische Vorrichtung (101) eine Verarbeitungseinheit (122), die mit einer Eingabevorrichtung (126) verbunden ist, und eine Anzeigevorrichtung (128) aufweist, wobei das Verfahren aufweist:
Verarbeiten der Indikatoren zum Identifizieren jedes Anhangs als ein Bild oder kein Bild, um dadurch eine Liste der Bilder an der tragbaren elektronischen Vorrichtung (101) zu erzeugen, wobei jeder der Indikatoren einen Namen und eine Erweiterung eines gegebenen Dateityps aufweist, der mit einem entsprechenden der Anhänge assoziiert ist, wobei die Identifizierung auf den Erweiterungen basiert, wobei die Liste nur Indikatoren aufweist, die Anhängen entsprechen, die als Bilder identifiziert sind;
Empfangen erster Eingabedaten von der Eingabevorrichtung (126), die angeben, dass einer der Indikatoren ausgewählt wurde, der einem der Anhänge entspricht, die als Bilder identifiziert sind;
Abrufen des einen der Anhänge, die als Bilder identifiziert sind, von dem entfernten Server (140, 144) entsprechend des ausgewählten einen der Indikatoren;
Bestimmen, dass der ausgewählte der Indikatoren auf der Liste einem Anhang entspricht, der fälschlicherweise als ein Bild identifiziert wurde, und
Entfernen des gegebenen Indikators aus der Liste, wobei das Bestimmen basiert auf
Vorverarbeiten, an dem entfernten Server (140, 144), des Anhangs, der dem ausgewählten einen der Indikatoren entspricht, durch Darstellen des Anhangs als ein Bild zur Anzeige an der Anzeigevorrichtung (128),
Bestimmen, an dem entfernten Server (140, 144), basierend auf der Vorverarbeitung, dass der Anhang kein Bild ist, und
Senden eines Anhang-Typ-Identifizierers an die tragbare elektronische Vorrichtung (101) ;
Bestimmen, dass ein Anhang, der durch einen entsprechenden Indikator identifiziert wird, der nicht auf der Liste ist, ein Bild ist, wobei der Anhang anfangs falsch identifiziert wurde, und Hinzufügen des entsprechenden Indikators zu der Liste derart, dass der Anhang, der durch den entsprechenden Indikator identifiziert wird, als das Bild angezeigt werden kann, wobei das Bestimmen auf einem oder mehreren basiert aus
Vorverarbeiten, an dem entfernten Server, des Anhangs, der durch den entsprechenden Indikator identifiziert wird, der nicht auf der Liste ist, wobei das Vorverarbeiten zu Bilddaten führt, und Senden eines Anhang-Typ-Identifizierers an die tragbare elektronische Vorrichtung (101), und
Verarbeiten, an der Verarbeitungseinheit (122), des Anhangs, der durch den entsprechenden Indikator identifiziert wird, der nicht auf der Liste ist, wobei das Verarbeiten zu Bilddaten führt;
Verarbeiten des einen der Bilder an der Verarbeitungseinheit (122) derart,
dass das eine der Bilder an der Anzeigevorrichtung (128) angezeigt wird;
Empfangen von zweiten Eingabedaten von der Eingabevorrichtung (126), die angeben, dass ein nächstes der Bilder anzuzeigen ist, wobei die zweiten Eingabedaten empfangen werden, während das eine der Bilder an der Anzeigevorrichtung (128) angezeigt wird; in Reaktion Identifizieren des nächsten der Bilder basierend auf der Liste;
Abrufen des nächsten der Bilder an der Verarbeitungsvorrichtung derart,
dass das nächste der Bilder an der Anzeigevorrichtung (128) angezeigt wird.

2. Das Verfahren gemäß Anspruch 1, wobei die zweiten Eingabedaten weiter angeben, dass die Bilder in einer Sequenz jeweils automatisch abzurufen und an der Anzeigevorrichtung (128) anzuzeigen sind.

3. Das Verfahren gemäß Anspruch 2, das weiter aufweist ein automatisches Abrufen und Anzeigen jedes Bilds in der Sequenz an der Anzeigevorrichtung (128).

4. Das Verfahren gemäß einem der Ansprüche 1 bis 3, das weiter aufweist ein Speichern der Bilder in einer Speichervorrichtung (125) an der tragbaren elektronischen Vorrichtung (101) nach einem Abrufen von dem entfernten Server (140, 144).

5. Das Verfahren gemäß Anspruch 4, das weiter aufweist:
Empfangen dritter Eingabedaten von der Eingabevorrichtung (126), die angeben, dass ein vorheriges der Bilder anzuzeigen ist, wobei die dritten Eingabedaten empfangen werden, während das nächste der Bilder an der Anzeigevorrichtung (128) angezeigt wird;
Abrufen des vorherigen der Bilder aus dem Speicher; und
Verarbeiten des vorherigen der Bilder an der Verarbeitungsvorrichtung derart, dass das vorherige der Bilder an der Anzeigevorrichtung (128) angezeigt wird.

6. Das Verfahren gemäß einem der Ansprüche 1 bis 5, wobei der entfernte Server (140, 144) zumindest einen aus einem Mail-Server (140), einem Anhang-Server (144) und einem Proxy-Server (142) aufweist.

7. Ein System, das eine tragbare elektronische Vorrichtung (101) zum Verarbeiten von Bildern und einen entfernten Server (140, 144) zum elektronischen Speichern von Bildern als Anhänge an Nachrichtdaten aufweist, wobei die Nachrichtdaten an der tragbaren elektronischen Vorrichtung (101) mit Indikatoren empfangen werden, die entsprechende Anhänge der Nachrichtdaten identifizieren, wobei die tragbare elektronische Vorrichtung (101) aufweist:
eine Verarbeitungseinheit (122), die mit einer Eingabevorrichtung (126) verbunden ist, und eine Anzeigevorrichtung (128), wobei die Verarbeitungseinheit (122) befähigt ist zum:
Verarbeiten der Indikatoren zum Identifizieren jedes Anhangs als ein Bild oder kein Bild, um dadurch eine Liste der Bilder an der tragbaren elektronischen Vorrichtung (101) zu erzeugen, wobei jeder der Indikatoren einen Namen und eine Erweiterung eines gegebenen Dateityps aufweist, der mit einem entsprechenden der Anhänge assoziiert ist, wobei die Identifizierung auf den Erweiterungen basiert, wobei die Liste nur Indikatoren aufweist, die Anhängen entsprechen, die als Bilder identifiziert sind;
Empfangen erster Eingabedaten von der Eingabevorrichtung (126), die angeben, dass einer der Indikatoren ausgewählt wurde, der einem der Anhänge entspricht, die als Bilder identifiziert sind;
Abrufen des einen der Anhänge, die als Bilder identifiziert sind, von dem entfernten Server (140, 144) entsprechend des ausgewählten einen der Indikatoren;
wobei der entfernte Server (140, 144) konfiguriert ist zum:
Bestimmen, dass der ausgewählte der Indikatoren auf der Liste einem Anhang entspricht, der fälschlicherweise als ein Bild identifiziert wurde, und
Entfernen des gegebenen Indikators aus der Liste, wobei das Bestimmen basiert auf
Vorverarbeiten, an dem entfernten Server (140, 144), des Anhangs, der dem ausgewählten einen der Indikatoren entspricht, durch Darstellen des Anhangs als ein Bild zur Anzeige an der Anzeigevorrichtung (128),
Bestimmen, an dem entfernten Server (140, 144), basierend auf der Vorverarbeitung, dass der Anhang kein Bild ist, und
Senden eines Anhang-Typ-Identifizierers an die tragbare elektronische Vorrichtung (101) ;
wobei die Verarbeitungseinheit (122) der tragbaren elektronischen Vorrichtung (101) weiter befähigt ist zum:
Bestimmen, dass ein Anhang, der durch einen entsprechenden Indikator identifiziert wird, der nicht auf der Liste ist, ein Bild ist, wobei der Anhang anfangs falsch identifiziert wurde, und Hinzufügen des entsprechenden Indikators zu der Liste derart, dass der Anhang, der durch den entsprechenden Indikator identifiziert wird, als das Bild angezeigt werden kann, wobei das Bestimmen auf einem oder mehreren basiert aus
Vorverarbeiten, an dem entfernten Server, des Anhangs, der durch den entsprechenden Indikator identifiziert wird, der nicht auf der Liste ist, wobei das Vorverarbeiten zu Bilddaten führt, und Senden eines Anhang-Typ-Identifizierers an die tragbare elektronische Vorrichtung (101), und
Verarbeiten, an der Verarbeitungseinheit (122), des Anhangs, der durch den entsprechenden Indikator identifiziert wird, der nicht auf der Liste ist, wobei das Verarbeiten zu Bilddaten führt;
Verarbeiten des einen der Bilder an der Verarbeitungseinheit (122) derart, dass das eine der Bilder an der Anzeigevorrichtung (128) angezeigt wird; Empfangen von zweiten Eingabedaten von der Eingabevorrichtung (126), die angeben, dass ein nächstes der Bilder anzuzeigen ist, wobei die zweiten Eingabedaten empfangen werden, während das eine der Bilder an der Anzeigevorrichtung (128) angezeigt wird; in Reaktion Identifizieren des nächsten der Bilder basierend auf der Liste;
Abrufen des nächsten der Bilder von dem entfernten Server (140, 144);
Verarbeiten des nächsten der Bilder an der Verarbeitungsvorrichtung derart, dass das nächste der Bilder an der Anzeigevorrichtung (128) angezeigt wird.

## Revendications

1. Procédé pour le traitement d'images au niveau d'un dispositif électronique portatif (101), lesdites images étant mémorisées de manière électronique au niveau d'un serveur distant (140, 144) en tant que pièces jointes à des données de message, lesdites données de message étant reçues au niveau dudit dispositif électronique portatif (101) avec lesdites pièces jointes remplacées par des indicateurs identifiant les pièces jointes correspondantes auxdites données de message, ledit dispositif électronique portatif (101) comprenant une unité (122) de traitement interconnectée avec un dispositif (126) d'entrée et un dispositif (128) d'affichage, ledit procédé comprenant :
le traitement desdits indicateurs pour identifier chaque pièce jointe comme étant une image ou n'étant pas une image pour générer ainsi une liste desdites images au niveau dudit dispositif électronique portatif (101), chacun desdits indicateurs comprenant un nom et une extension d'un type de fichier donné associée à l'une, correspondantes, desdites pièces jointes, ladite identification étant basée sur lesdites extensions, ladite liste comprenant seulement les indicateurs correspondant aux pièces jointes identifiées comme étant des images ;
la réception d'une première donnée d'entrée, provenant dudit dispositif (126) d'entrée, représentative de ce que l'un desdits indicateurs, correspondant à l'une desdites pièces jointes identifiées comme étant des images, a été choisi ;
la récupération, à partir dudit serveur distant (140, 144), de ladite une desdites pièces jointes identifiées comme étant des images correspondant audit un, choisi, desdits indicateurs ;
la détermination de ce que ledit un, choisi, desdits indicateurs sur ladite liste correspond à une pièce jointe qui a été identifiée à tort comme étant une image et l'élimination dudit indicateur donné de ladite liste, ladite détermination étant basée sur :
le prétraitement, au niveau dudit serveur distant (140, 144), de ladite pièce jointe correspondant audit un, choisi, desdits indicateurs en restituant ladite pièce jointe comme une image pour affichage au niveau dudit dispositif (128) d'affichage ;
la détermination, au niveau dudit serveur distant (140, 144), en se basant sur ledit prétraitement, que ladite pièce jointe n'est pas une image ; et
la transmission, audit dispositif électronique portatif (101), d'un identificateur de type de pièce jointe ;
la détermination qu'une pièce jointe identifiée par un indicateur correspondant qui n'est pas sur ladite liste est une image, ladite pièce jointe ayant été initialement mal identifiée, et l'ajout à ladite liste dudit indicateur correspondant, de sorte que ladite pièce jointe identifiée par ledit indicateur correspondant peut être affichée comme étant ladite image, ladite détermination étant basée sur un ou plusieurs :
d'un prétraitement, au niveau dudit serveur distant, de ladite pièce jointe identifiée par ledit indicateur correspondant qui n'est pas sur ladite liste, ledit prétraitement ayant pour résultat des données d'image, et d'une transmission d'un identificateur de type de pièce jointe audit dispositif électronique portatif (101) ; et
d'un traitement, au niveau de ladite unité (122) de traitement, de ladite pièce jointe identifiée par ledit indicateur correspondant qui n'est pas sur ladite liste, ledit traitement ayant pour résultat des données d'image ;
le traitement de ladite une desdites images, au niveau de ladite unité (122) de traitement, de sorte que ladite une desdites images est affichée au niveau dudit dispositif (128) d'affichage ;
la réception d'une deuxième donnée d'entrée, provenant dudit dispositif (126) d'entrée, représentative de ce que la suivante desdites images est à afficher, ladite deuxième donnée d'entrée étant reçue tandis que ladite une desdites images est affichée au niveau dudit dispositif (128) d'affichage ; en réponse,
l'identification, en se basant sur ladite liste, de ladite suivante desdites images ;
la récupération, à partir dudit serveur distant (140, 144), de ladite suivante desdites images ;
le traitement de ladite suivante desdites images, au niveau dudit dispositif de traitement, de sorte que ladite suivante desdites images est affichée au niveau dudit dispositif (128) d'affichage.

2. Procédé selon la revendication 1, dans lequel ladite deuxième donnée d'entrée est en outre représentative de ce que lesdites images sont chacune à récupérer et à afficher automatiquement en une séquence au niveau dudit dispositif (128) d'affichage.

3. Procédé selon la revendication 2, comprenant en outre la récupération et l'affichage automatiques de chacune desdites images de ladite séquence au niveau dudit dispositif (128) d'affichage.

4. Procédé selon l'une quelconque des revendications 1 à 3, comprenant en outre la mémorisation desdites images dans un dispositif (125) de mémoire au niveau dudit dispositif électronique portatif (101) lors de la récupération à partir dudit serveur distant (140, 144).

5. Procédé selon la revendication 4, comprenant en outre :
la réception d'une troisième donnée d'entrée, provenant dudit dispositif (126) d'entrée, représentative de ce que la précédente desdites images est à afficher, ladite troisième donnée d'entrée étant reçue tandis que ladite suivante desdites images est affichée au niveau dudit dispositif (128) d'affichage ;
la récupération, dans ladite mémoire, de ladite précédente desdites images ; et
le traitement de ladite précédente desdites images, au niveau dudit dispositif de traitement, de sorte que ladite précédente desdites images est affichée au niveau dudit dispositif (128) d'affichage.

6. Procédé selon l'une quelconque des revendications 1 à 5, dans lequel ledit serveur distant (140, 144) consiste en au moins l'un d'un serveur (140) de courrier, d'un serveur (144) de pièces jointes et d'un serveur mandataire (142).

7. Système comprenant un dispositif électronique portatif (101) pour le traitement d'images et un serveur distant (140, 144) destiné à mémoriser de manière électronique des images en tant que pièces jointes à des données de message, lesdites données de message étant reçues au niveau dudit dispositif électronique portatif (101) avec des indicateurs identifiant les pièces jointes auxdites données de message correspondantes, ledit dispositif électronique portatif (101) comprenant :
une unité (122) de traitement interconnectée avec un dispositif (126) d'entrée et un dispositif (128) d'affichage, ladite unité (122) de traitement ayant la possibilité :
de traiter lesdits indicateurs pour identifier chaque pièce jointe comme étant une image ou n'étant pas une image pour générer ainsi une liste desdites images au niveau dudit dispositif électronique portatif (101), chacun desdits indicateurs comprenant un nom et une extension d'un type de fichier donné associée à l'une, correspondantes, desdites pièces jointes, ladite identification étant basée sur lesdites extensions, ladite liste comprenant seulement les indicateurs correspondant aux pièces jointes identifiées comme étant des images ;
de recevoir une première donnée d'entrée, provenant dudit dispositif (126) d'entrée, représentative de ce que l'un desdits indicateurs, correspondant à l'une desdites pièces jointes identifiées comme étant des images, a été choisi ;
de récupérer, à partir dudit serveur distant (140, 144), ladite une desdites pièces jointes identifiées comme étant des images correspondant audit un, choisi, desdits indicateurs ;
ledit serveur distant (140, 144) étant configuré pour :
déterminer que ledit un, choisi, desdits indicateurs sur ladite liste correspond à une pièce jointe qui a été identifiée à tort comme étant une image et éliminer ledit indicateur donné de ladite liste, ladite détermination étant basée sur :
le prétraitement, au niveau dudit serveur distant (140, 144), de ladite pièce jointe correspondant audit un, choisi, desdits indicateurs en restituant ladite pièce jointe comme une image pour affichage au niveau dudit dispositif (128) d'affichage ;
la détermination, au niveau dudit serveur distant (140, 144), en se basant sur ledit prétraitement, que ladite pièce jointe n'est pas une image ; et
la transmission, audit dispositif électronique portatif (101), d'un identificateur de type de pièce jointe,
dans lequel ladite unité (122) de traitement dudit dispositif électronique portatif (101) a la possibilité :
de déterminer qu'une pièce jointe identifiée par un indicateur correspondant qui n'est pas sur ladite liste est une image, ladite pièce jointe ayant été initialement mal identifiée, et d'ajouter à ladite liste ledit indicateur correspondant, de sorte que ladite pièce jointe identifiée par ledit indicateur correspondant peut être affichée comme étant ladite image, ladite détermination étant basée sur un ou plusieurs :
d'un prétraitement, au niveau dudit serveur distant, de ladite pièce jointe identifiée par ledit indicateur correspondant qui n'est pas sur ladite liste, ledit prétraitement ayant pour résultat des données d'image, et d'une transmission d'un identificateur de type de pièce jointe audit dispositif électronique portatif (101) ; et
d'un traitement, au niveau de ladite unité (122) de traitement, de ladite pièce jointe identifiée par ledit indicateur correspondant qui n'est pas sur ladite liste, ledit traitement ayant pour résultat des données d'image ;
de traiter ladite une desdites images, au niveau de ladite unité (122) de traitement, de sorte que ladite une desdites images est affichée au niveau dudit dispositif (128) d'affichage ;
de recevoir une deuxième donnée d'entrée, provenant dudit dispositif (126) d'entrée, représentative de ce que la suivante desdites images est à afficher, ladite deuxième donnée d'entrée étant reçue tandis que ladite une desdites images est affichée au niveau dudit dispositif (128) d'affichage ; en réponse,
d'identifier, en se basant sur ladite liste, ladite suivante desdites images ;
de récupérer, à partir dudit serveur distant (140, 144), ladite suivante desdites images ;
de traiter ladite suivante desdites images, au niveau dudit dispositif de traitement, de sorte que ladite suivante desdites images est affichée au niveau dudit dispositif (128) d'affichage.
